# FASCICULE DE BREVET EUROPEEN

(11) **EP 1 219 407 B1**
(45) Date de publication et mention de la délivrance du brevet: **04.05.2005**
(21) Numéro de dépôt: 01480151.8
(22) Date de dépôt: 27.12.2001
(51) Int. Cl.: B29C 65/14, H05B 3/56

(54) **Dispositif de soudage de pièces en matière thermoplastique par rayonnement électromagnétique notamment infrarouge**
Vorrichtung zum Verschweissen von thermoplastischen Kunststoffteilen durch elektromagnetische Strahlung, insbesondere Infrarotstrahlung
Device for welding thermoplastic workpieces by electromagnetic radiation, particularly by infrared radiation

(30) Priorité: 28.12.2000 FR 0017177
(43) Date de publication de la demande: 03.07.2002
(73) Titulaire: Mécaplast, 98014 Monaco (MC); FTI Mecasonic, 74105 Annemasse (FR)
(72) Inventeur: Janin, Jean-Louis, 74250 Fillinges (FR); Cerutti, Christophe, 74370 Metz Tessy (FR); Rossignol, Vincent, 06100 Nice (FR)
(74) Mandataire: Vieillefosse, Jean-Claude

(56) Documents cités:
- DE-A- 1 942 047
- DE-A- 4 242 812
- FR-A- 1 410 508
- FR-A- 2 706 353
- GB-A- 2 121 351
- US-A- 3 389 033
- US-A- 4 666 800
- US-A- 6 041 164

## Description

### Domaine technique

La présente invention concerne le soudage de pièces en matière thermoplastique utilisé notamment par les équipementiers pour l'assemblage des pièces dans l'industrie automobile, et concerne en particulier un dispositif de soudage de pièces en matière thermoplastique par rayonnement électromagnétique et en particulier par rayonnement infrarouge.

### Etat de la technique

Pour l'assemblage des pièces en matière thermoplastique, on a déjà utilisé des procédés à base de miroir chauffant dans lesquels on provoque la fusion de la matière superficielle de la ligne de joint d'au moins une des pièces par la mise en contact d'un élément métallique à température élevée avec la ligne de joint. La matière superficielle de la ligne de joint étant fondue, l'élément chauffant est retiré et les deux pièces sont mises en contact pour obtenir leur soudage après refroidissement de la matière. Malheureusement, cette technique nécessite un nettoyage fréquent de l'élément chauffant si on ne veut pas que se forme sur ce dernier un bourrelet de matière thermoplastique empêchant un bon transfert de chaleur et générant un cordon de soudure non homogène.

On a donc remplacé ces procédés par des techniques de chauffage sans contact telles que la technique par air chaud dans laquelle de l'air chaud est envoyé sous débit et température contrôlés sur les zones à fondre, l'air étant réparti uniformément sur le cordon de soudure à l'aide d'une buse. Malheureusement, cette technique présente de nombreux inconvénients et notamment des problèmes de régulation thermique et nécessite en particulier que la buse d'arrivée d'air soit maintenue au plus près de la surface à fondre, et donc une mauvaise maîtrise de l'épaisseur du cordon de soudure.

La technique de soudage sans contact la plus intéressante consiste à utiliser une source de rayonnement infrarouge sous la forme d'un élément résistif filaire se trouvant dans une gorge réfléchissante tel que décrit dans le brevet FR 93 07333. La forme de l'élément résistif est adaptée au plus près à la géométrie des lignes de joint des pièces à assembler et la focalisation du rayonnement due à la gorge réfléchissante permet un chauffage homogène de la ligne de joint. Pour permettre une grande efficacité, on utilise un rayonnement infrarouge ayant une longueur d'onde d'environ 1µm correspondant à des températures de plus de 2000°C. Malheureusement, à cette température le fil chauffant s'oxyde rapidement et perd rapidement sa capacité de rayonnement. C'est pourquoi il est nécessaire de placer le fil dans un tube en verre ou en quartz rempli d'un gaz inerte pour éviter toute oxydation. Malheureusement, cette technique présente des inconvénients que le fil chauffant soit protégé ou non dans un tube en verre. En effet, l'utilisation d'un fil non protégé, outre le phénomène d'oxydation déjà cité, ne permet pas le contact sans court-circuit entre deux points du fil. Il faut donc séparer le brin d'arrivée du brin de sortie, ce qui crée inévitablement un point froid sans chauffage dans le cas d'une ligne de joint fermée comme c'est souvent le cas. Si, comme mentionné plus haut, le fil est protégé dans un tube, l'élément chauffant présente alors un diamètre trop important pour autoriser des faibles rayons de courbure nécessaires pour s'adapter au plus près à la géométrie de la ligne de joint.

### Exposé de l'invention

C'est pourquoi un premier but de l'invention est de fournir un dispositif de soudage de matière thermoplastique par rayonnement infrarouge, selon la revendication 1, dans lequel l'élément chauffant peut être adapté à toute forme de ligne de joint. Un autre but de l'invention est de fournir un procédé de soudage selon la revendication 18.

Un deuxième but de l'invention est de fournir un dispositif de soudage de matière thermoplastique par rayonnement électromagnétique et notamment infrarouge dans lequel on peut mettre en contact des portions de l'élément chauffant sans provoquer de court-circuit.

Un autre but de l'invention est de fournir un dispositif de soudage du type ci-dessus évitant les points froids ceci quelle que soit la géométrie de la ligne de joint.

### Brève description des figures

Les buts, objets et avantages de l'invention seront mieux compris à la lecture de la description qui suit faite en référence aux dessins dans lesquels :
- la figure 1 est une coupe du dispositf de soudage selon l'invention montrant l'élément résistif placé dans une gorge et le cordon de matière thermoplastique soumis au rayonnement infrarouge,
- la figure 2 est une représentation en coupe d'un mode de réalisation de l'élément résistif du dispositif selon l'invention,
- la figure 3 représente une boucle de l'élément résistif utilisé pour sa fixation,
- la figure 4 est une vue en coupe d'un évidement du support dans lequel se trouve une boucle de l'élément résistif, et
- la figure 5 représente une vue de dessus d'un dispositif selon l'invention avec ses boucles de fixation.

### Description détaillée de l'invention

Les pièces en matière thermoplastique soumises au soudage miroir sans contact selon l'invention peuvent être toutes sortes de pièces ayant des profils quelconques telles que les deux parties d'un réservoir, d'un tuyau, d'un carter etc. Les deux pièces à souder comportent chacune une ligne de joint continue ou en plusieurs parties disposant d'un cordon ou d'une couche de matière thermoplastique superficielle destinée à fondre sous l'effet de la chaleur générée par le rayonnement infrarouge et à se fixer sur l'autre ligne de joint. On entend par matière thermoplastique superficielle une couche de matière thermoplastique ayant une épaisseur depuis la surface, qui est variable selon la matière thermoplastique utilisée. Les deux lignes de joint ont une forme quelconque dans l'espace et en particulier peuvent être dans un même plan sans que cela soit une limitation de l'invention. On peut procéder au chauffage d'une seule des lignes de joint, mais il est préférable d'effectuer le chauffage simultané des deux lignes de joint.

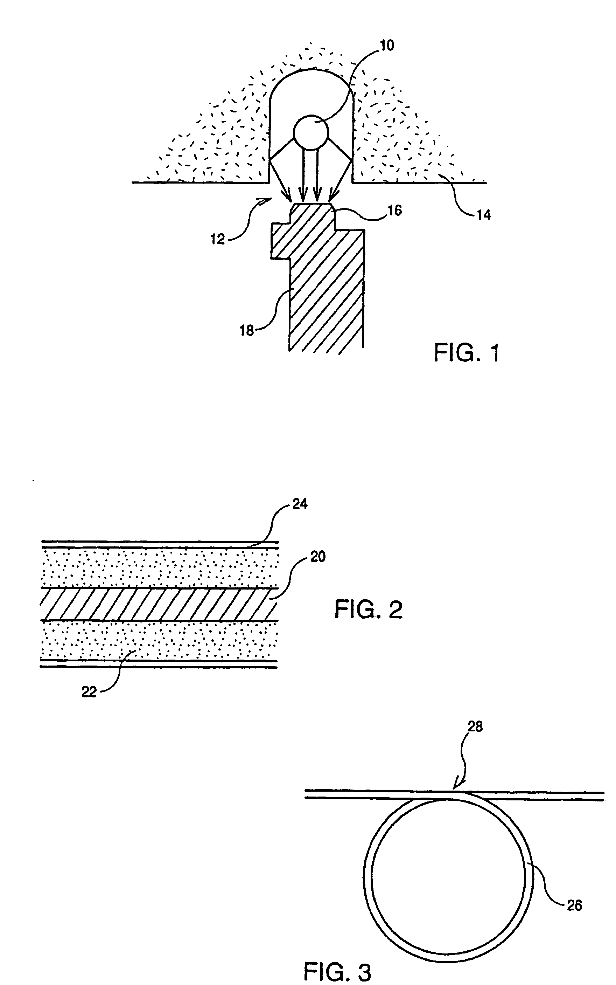

Selon un mode de réalisation préféré, le dispositif de soudage selon l'invention est composé essentiellement d'un élément résistif dans lequel passe un courant électrique de façon à générer un rayonnement infrarouge. L'élément résistif est fixé à la surface d'un support tel qu'une plaque de céramique ou une plaque métallique et a un profil adapté au plus prés à la géométrie de la ligne de joint de la pièce à souder. Selon un mode de réalisation particulier, l'élément résistif 10, représenté en coupe sur la figure 1, peut être placé dans une gorge 12 du support ou de la plaque 14, ceci afin de permettre une focalisation du rayonnement infrarouge sur le cordon 16 à faire fondre la pièce à souder 18. Pour améliorer la focalisation il est judicieux que la gorge 12 ait des parois réfléchissantes de sorte que les rayons infrarouges soient concentrés sur le cordon 16 comme illustré sur la figure 1, mais ceci n'est pas une nécessité absolue pour la mise en oeuvre de l'invention.

Enfin, la distance entre l'élément résistif ou la surface du support (dans le cas où l'élément résistif est dans une gorge) et le cordon de la ligne de joint, est généralement comprise entre 1 et 5mm, bien que l'efficacité du soudage soit peu dépendante de cette distance et que l'on puisse tolérer des déformations du cordon à souder entraînant des variations de cette distance.

L'élément résistif est composé essentiellement d'un ou plusieurs fils résistifs. Chaque fil résistif est formé d'une âme en métal résistif ou en alliage métallique résistif entouré d'une gaine isolante.

Dans un mode de réalisation particulier illustré par la figure 2, l'âme métallique 20 est entourée d'un gainage isolant constitué d'une certaine épaisseur d'un composé minéral pulvérulent 22 servant d'isolant et d'une gaine ou enveloppe 24 présentant une émissivité élevée afin de rayonner la plus grande quantité possible d'énergie. L'âme métallique dans laquelle circule le courant électrique doit présenter une grande résistivité dans la mesure où la puissance électrique par effet joule est, pour un courant I donné, proportionnelle à la résistivité. Ainsi, on peut utiliser un alliage de nickel-chrome d'une résistivité égale à 1,09.10⁻⁶ ohms.m²/m. On doit noter qu'il n'est pas indispensable que le gainage comporte un composé isolant entouré d'une gaine, et que ce gainage pourrait être constitué d'un seul matériau réunissant les propriétés des deux constituants ci-dessus.

La caractéristique essentielle du fil résistif est sa grande flexibilité lui permettant d'être déformé de manière à prendre un profil adapté au plus prés à la géométrie de la ligne de joint, cette flexibilité provenant d'une part de son faible diamètre et d'autre part de sa structure. Pour être en mesure de s'adapter à toutes les formes, il est nécessaire que le fil résistif puisse être plié pour épouser de très faibles rayons de courbure aussi petits que 1,5mm.

Le fait que l'âme du fil soit dans un gainage isolant permet de croiser le fil avec contact sans provoquer de court-circuit. Ainsi, si la ligne de joint est une ligne fermée comme c'est souvent le cas, il n'y a aucun problème à réaliser un croisement du fil au point d'entrée/sortie où les deux portions du fil sont en contact l'une de l'autre de façon à fermer le profil de l'élément résistif pour l'adapter à la ligne de joint fermée. Au point d'entrée/sortie, il existe bien un éloignement du fil par rapport à la ligne de joint, mais cette variation de distance est minime puisque le fil a un faible diamètre, et d'autre part, on a vu précédemment que les faibles variations de la distance entre l'élément résistif et la ligne de joint avaient peu d'influence sur la chaleur fournie. Lorsque plusieurs fils sont utilisés, ils sont rendus solidaires par un moyen quelconque de manière à accroître la rigidité de l'ensemble multifil.

En outre, l'isolation du fil permet d'utiliser deux fils ou plus côte à côte pour réaliser le profil sans craindre un court-circuit. Cette possiblité permet ainsi de multiplier par deux (ou plus) la puissance thermique fournie.

La fixation de l'élément résistif sur son support a donné lieu à une caractéristique essentielle de l'invention. En effet, une fixation classique consistant à fixer le fil en plusieurs points du support introduirait des points froids où le rayonnement infrarouge ne se fait pas dans la mesure où le fil est recouvert en ces points par un élément de fixation. La solution consiste à former des boucles aux points de fixation comme illustré sur la figure 3. La boucle 26 est fixée par un moyen de fixation classique, mais elle se trouve en dehors du trajet de l'élément résistif. Le profil de l'élément résistif n'est pas modifié excepté au point de croisement de fils 28 où un brin de fil passe sur l'autre brin. Il y a donc un léger éloignement du fil par rapport à la ligne de joint. Mais cette variation de distance n'est pas du tout un inconvénient comme on l'a vu précédemment à propos du point d'entrée/sortie.

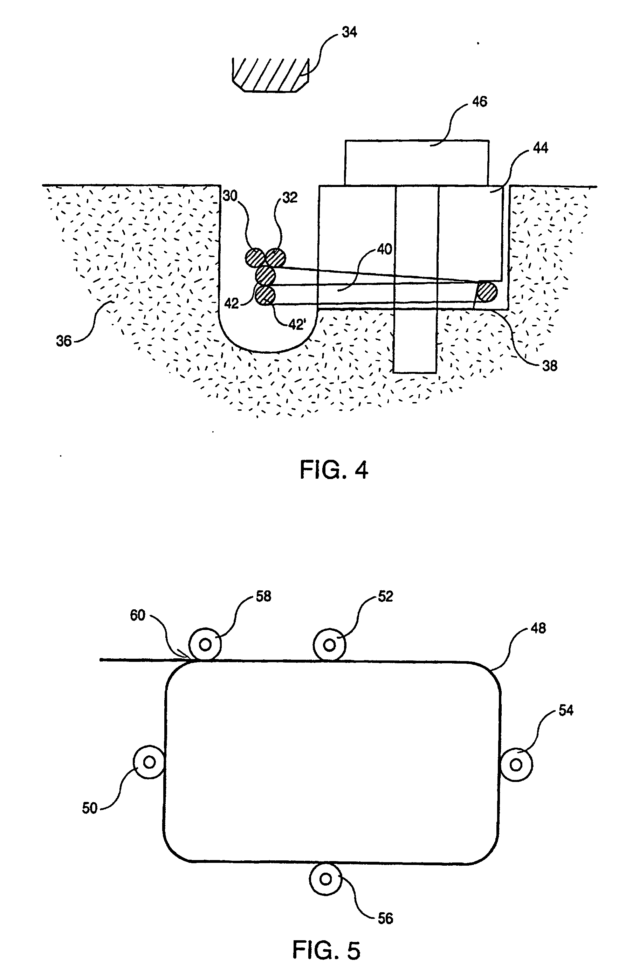

Un exemple de réalisation du dispositif de soudage avec boucles de fixation est illustré par les figures 4 et 5. Dans cet exemple, on a utilisé trois fils résistifs placés dans une gorge. Comme représenté en coupe sur la figure 4, deux fils 30 et 32 sont à la même distance de la ligne de joint 34 et un troisième fil est situé sous les deux premiers. C'est ce fil qui est utilisé pour les boucles et la fixation. Pour ce faire, le support 36 comporte un évidement 38 dans lequel se trouve la boucle 40 formée par le troisième fil, le croisement des portions 42 et 42' se situant sous les deux fils 30 et 32. La fixation de la boucle 40 est réalisée au moyen d'un élément de serrage 44 et de la vis de serrage 46. Afin de ne pas réaliser de pont thermique néfaste à la continuité thermique de l'élément résistif, il est souhaitable que la fixation de la boucle 40 se fasse sans contact de celle-ci avec le support 36 mais seulement avec l'élément de serrage 44 (de préférence en matériau réfractaire) comme illustré sur la figure 4, de manière à ce que l'échange thermique soit maîtrisé.

En plus d'éviter d'introduire des points froids, un autre intérêt de la fixation de l'élément résistif au moyen de boucles est de rendre rigide l'élément résistif sur tout le pourtour tout en évitant tout contact entre les fils et le support puisque les fils 30, 32 et 42 sont maintenus en position grâce à la présence des boucles. La boucle 40 pourrait d'ailleurs comporter deux ou plusieurs fils pour la rendre plus rigide.

La figure 5 représente une vue de dessus de l'élément résistif 48 adapté à un profil fermé de ligne de joint. L'élément résistif comporte cinq boucles dont quatre boucles 50, 52, 54, 56 sont situées au milieu des côtés du rectangle formé par l'élément résistif et une boucle 58 est au point d'entrée/sortie 60 de l'élément résistif. On doit noter que la boucle 58 est en fait une double boucle puisqu'elle comprend une boucle pour le brin d'entrée et une boucle pour le brin de sortie.

Comme cela a déjà été mentionné, la ligne de joint peut être formée de plusieurs parties. Ceci peut correspondre à plusieurs soudures à réaliser sur la même pièce pendant un même cycle de traitement. Dans ce cas, le dispositif selon l'invention comporte plusieurs éléments résistifs pour lesquels les distances par rapport aux parties de la ligne de joint correspondantes sont différentes ainsi que les caractéristiques du courant électrique utilisé afin d'ajuster l'énergie de rayonnement reçue par les différentes parties de la ligne de joint. Ces différentes parties de la ligne de joint pourraient d'ailleurs être constituées de matières thermoplastiques différentes. Les caractéristiques électriques du courant traversant les éléments résistifs et la distance séparant les éléments résistifs de la ligne de joint peuvent aussi être réglés ou asservis en fonction du temps de manière à augmenter l'efficacité de la fusion ou au contraire afin d'éviter la dégradation de la matière thermoplastique en fusion. De façon générale, afin d'éviter les phénomènes de brûlure par excès d'apport calorifique à la matière thermoplastique superficielle, il est nécessaire de prévoir une gestion pilotée de la puissance émise par le dispositif de soudage ainsi que de la distance entre le (ou les) élément(s) résistif(s) et la surface de la pièce à traiter.

## Revendications

1. Dispositif de soudage par émission d'un rayonnement électromagnétique du type dans lequel deux pièces en matière thermoplastique sont assemblées par fusion de la matière thermoplastique superficielle de la ligne de joint (16) d'au moins une des deux pièces à assembler et rapprochement subséquent desdites pièces, ledit dispositif comprenant au moins un élément résistif (10) parcouru par un courant électrique et ayant un profil correspondant le mieux possible à la géométrie de ladite ligne de joint,;
ledit dispositif étant **caractérisé en ce que**, ledit élément résistif (10) est fixé sur un support (14) et est constitué d'au moins un fil composé d'une âme métallique (20) entourée d'un gainage isolant (22, 24) autorisant le contact sans court-circuit entre au moins deux points dudit élément résistif et ledit fil étant suffisamment flexible pour permettre d'obtenir des rayons de courbure allant jusqu'à 1,5mm.

2. Dispositif selon la revendication 1, comprenant plusieurs éléments résistifs (10) correspondant à plusieurs parties de ladite ligne de joint (16), et dans lequel le rayonnement électromagnétique fourni par chacun desdits éléments résistifs est différent selon la partie de la ligne de joint correspondante.

3. Dispositif selon la revendication 2, dans lequel la distance entre un élément résistif et une partie de la ligne de joint correspondante est différente selon ladite partie.

4. Dispositif selon la revendication 2 ou 3, dans lequel les différentes parties de la ligne de joint (16) correspondent à des matières thermoplastiques différentes.

5. Dispositif selon l'une des revendications 1 à 4, dans lequel la puissance fournie audit élément résistif est asservie en fonction du temps de manière à augmenter l'efficacité de la fusion ou éviter la dégradation de la matière thermoplastique en fusion.

6. Dispositif selon l'une des revendications 1 à 5, dans lequel ledit élément résistif est placé dans une gorge (12) dudit support (14).

7. Dispositif selon la revendication 6, dans lequel ladite gorge (12) est réfléchissante.

8. Dispositif selon l'une des revendications 1 à 7, dans lequel l'élément résistif (10) comporte une pluralité de boucle (50, 52, 54, 56, 58) fixée audit support chaque boucle étant formée par le retour du fil sur lui-même et le croisement des deux portions du fil se faisant tangentiellement au trajet dudit élément résistif.

9. Dispositif selon la revendication 8, dans lequel ledit élément résistif comprend trois fils, les deux premiers desdits fils (30, 32) étant à égale distance de ladite ligne de joint et au moins un troisième fil (42) comportant lesdites boucles servant à la fixation et situé sous lesdits deux premiers fils.

10. Dispositif selon l'une des revendications 1 à 9, dans lequel ledit gainage isolant est constitué d'une couche (22) d'un matériau minéral pulvérulent et d'une gaine (24).

11. Dispositif selon la revendication 10, dans lequel ledit conducteur métallique (20) est en alliage chrome-nickel.

12. Dispositif selon la revendication 10 ou 11, dans lequel ladite gaine (24) est un matériau possédant une grande émissivité du rayonnement infrarouge.

13. Dispositif selon l'une des revendications 1 à 12, dans lequel ledit élément résistif présente une pluralité de fils.

14. Dispositif selon l'une des revendications 1 à 13, dans lequel l'élément résistif présente au moins deux fils côte à côte.

15. Dispositif selon l'une des revendications 1 à 14, dans lequel l'élément résistif présente au moins deux fils solidaires.

16. Dispositif selon l'une des revendications 1 à 15, dans lequel l'élément résistif est fixé sur une surface du support.

17. Dispositif selon l'une des revendications 1 à 16, dans lequel l'élément résistif présente un croisement des portions du fils à l'entrée/sortie d'une ligne de joint fermée.

18. Un procédé de soudage de pièces en matière thermoplastique, comprenant :
- une étape de fusion, par émission d'un rayonnement électromagnétique, de la matière thermoplastique superficielle de la ligne de joint d'au moins une des pièces à souder, à l'aide d'un dispositif selon l'une des revendications 1 à 17 ;
- une étape subséquente de rapprochement desdites pièces.

## Patentansprüche

1. Vorrichtung zum Schweißen mittels Emission von einer elektromagnetischen Strahlung, in welcher zwei Stücke aus thermoplastischen Material aneinandergefügt werden durch eine Fusion des thermoplastischen Oberflächen-Materials an der Verbindungslinie von mindestens einem der beiden zu verbindenden Stücke und durch nachfolgendes Zusammenbringen der Stücke, wobei die Vorrichtung mindestens ein resistives Element (10), welches von einem elektrischen Strom durchströmt wird und ein Profil aufweist, welches bestmöglichst mit der Geometrie der verbindungslinie korrespondiert;
wobei die Vorrichtung **dadurch gekennzeichnet ist, dass** das resistive Element (10) auf einem Träger (14) befestigt ist und mindestens von einer Leitung gebildet ist, welche sich aus einem metallischen Kern (20), der von einer Isolier-Umhüllung (22, 24) umgeben ist, zusammensetzt, welche den Kontakt zwischen mindestens zwei Stellen des resistiven Elements ohne Kurzschluss erlaubt, wobei die Leitung ausreichend flexibel ist zum Ermöglichen, Krümmungsradien zu erzielen, welche bis 1,5 mm reichen.

2. Vorrichtung gemäß Anspruch 1, welche mehrere resistive Elemente (10) aufweist, welche mit mehreren Abschnitten der Verbindungslinie (16) korrespondieren, und in welcher die elektromagnetische Strahlung, welche von jedem der resistiven Elemente geliefert wird, gemäß dem Abschnitt der korrespondierenden Verbindungslinie unterschiedlich ist.

3. Vorrichtung gemäß Anspruch 2, in welcher der Abstand zwischen einem resistiven Element und einem Abschnitt der Verbindungslinie gemäß diesem Abschnitt unterschiedlich ist.

4. Vorrichtung gemäß Anspruch 2 oder 3, in welcher die unterschiedlichen Abschnitte der Verbindungslinie (16) mit den unterschiedlichen thermoplastischen Materialien korrespondieren.

5. Vorrichtung gemäß einem der Ansprüche 1 bis 4, in welcher die Leistung, welche an die resistiven Elemente geliefert wird, sich abhängig von der Zeit ergibt, so dass die Effizienz der Fusion vergrößert wird oder das Verschlechtern des thermoplastischen Materials bei der Fusion verhindert wird.

6. Vorrichtung gemäß einem der Ansprüche 1 bis 5, in welcher das resistive Element in einer Vertiefung (12) des Trägers (14) platziert ist.

7. Vorrichtung gemäß Anspruch 6, in welcher die Vertiefung (12) reflektierend ist.

8. vorrichtung gemäß einem der Ansprüche 1 bis 7, in welcher das resistive Element (10) eine Mehrzahl von Schleifen (50, 52, 54, 56, 58) aufweist, welche an dem Träger befestigt ist,
wobei jede Schleife durch die Rückführung der Leitung auf sich selbst ausgebildet ist und die Kreuzung der zwei Abschnitte der Leitung tangential zu der Bahn des resistiven Elements 1 ausgebildet ist.

9. Vorrichtung gemäß Anspruch 8, in welcher das resistive Element drei Leitungen aufweist, wobei die zwei ersten der Leitungen (30, 32) im gleichen Abstand zu der Verbindungslinie sind und wobei wenigstens eine dritte Leitung (42) die Schleifen aufweist, welche zur Befestigung dienen, und unter den beiden ersten Leitungen angeordnet ist.

10. vorrichtung gemäß einem der Ansprüche 1 bis 9, in welcher die Isolier-Umhüllung aus einer Schicht (22) aus einem pulvrigen Mineralmaterial und einem Mantel (24) gebildet ist.

11. Vorrichtung gemäß Anspruch 10, in welcher der metallische Leiter (20) eine Chrom-Nickel-Legierung ist.

12. Vorrichtung gemäß Anspruch 10 oder 11, in welcher der Mantel (24) ein Material ist, welches ein großes Infrarotstrahlung-Emissionsvermögen hat.

13. Vorrichtung gemäß einem der Ansprüche 1 bis 12, in welcher das resistive Element eine Mehrzahl von Leitungen aufweist.

14. Vorrichtung gemäß einem der Ansprüche 1 bis 13, in welcher das resistive Element mindestens zwei nebeneinanderliegende Leitungen aufweist.

15. vorrichtung gemäß einem der Ansprüche 1 bis 14, in welcher das resistive Element mindestens zwei einstückige Leitungen aufweist.

16. Vorrichtung gemäß einem der Ansprüche 1 bis 15, in welcher das resistive Element auf einer Fläche des Trägers befestigt ist.

17. Vorrichtung gemäß einem der Ansprüche 1 bis 16, in welcher das resistive Element eine Kreuzung der Abschnitte der Leitungen am Eingang/Ausgang von einer geschlossenen Verbindungslinie aufweist.

18. Verfahren zum Schweißen von Stücken aus thermoplastischen Material, aufweisend:
- einen Fusions-Schritt des thermoplastischen Oberflächen-Materials an der Verbindungslinie von mindestens einem der zu schweißenden Stücke durch Emission einer elektromagnetischen Strahlung mit Hilfe einer Vorrichtung gemäß einem der Ansprüche 1 bis 17;
- einen nachfolgenden Zusammenbring-Schritt der Stücke.

## Claims

1. A device for electromagnetic radiation emission welding of the type in which two thermoplastic material parts are assembled by fusing of the surface thermoplastic material of the line of joining (16) of at least one of the two parts to be assembled, the said parts being subsequently brought together, said device comprising at least one resistive element (10) through which an electric current passes and having a profile that corresponds as far as possible to the geometry of said line of joining;
said device being **characterised in that** said resistive element (10) is secured on a support (14) and is constituted by at least one wire consisting of a metal core (20) surrounded by an insulating sheath (22, 24) allowing contact, without short-circuiting, between at least two points on said resistive element, and said wire being sufficiently flexible to allow radii of curvatures down to 1.5 mm to be obtained.

2. The device according to claim 1, comprising several resistive elements (10) corresponding to several portions of said line of joining (16), and in which the electromagnetic radiation supplied by each one of said resistive elements is different depending on the portion of the corresponding line of joining.

3. The device according to claim 2, in which the distance between a resistive element and a portion of the corresponding line of joining differs as a function of said portion.

4. The device according to claim 2 or 3, in which the different portions of said line of joining (16) correspond to different thermoplastic materials.

5. The device according to one of Claims 1-4, in which the power supplied to said resistive element is controlled as a function of time so as to increase the effectiveness of fusion or avoid deterioration of the melted thermoplastic material.

6. The device according to one of Claims 1-5, in which said resistive element is placed in a channel (12) of said support (14).

7. The device according to claim 6, in which said channel (12) is reflecting.

8. The device according to one of Claims 1-7, in which the resistive element (10) includes a plurality of loops (50,52,54,56,58) secured to said support, each loop being formed by passing the wire back on itself and the intersection of the two wire portions being arranged tangentially to the path of said resistive element.

9. The device according to claim 8, in which said resistive element comprises three wires, the first two of said wires (30,32) being at an equal distance from said line of joining and at least one third wire (42) carrying said loops adapted for securing and being located underneath said first two wires.

10. The device according to one of Claims 1-9, in which said insulating sheath consists of a layer (22) of inorganic material in powder form and a sheath (24).

11. The device according to claim 10, in which said metal conductor (20) is a chrome-nickel alloy.

12. The device according to claim 10 or 11, in which said sheath (24) is of a material having elevated emissivity of infra-red radiation.

13. The device according to one of claims 1 to 12, in which said resistive element has a plurality of wires.

14. The device according to one of Claims 1-13, in which said resistive element has at least two wires side by side.

15. The device according to one of Claims 1-14, in which the resistive element has at least two integral wires.

16. The device according to one of Claims 1-15, in which the resistive element is secured onto the surface of said support.

17. The device according to one of claims 1-16, in which the resistive element has an intersection of wire portions at the entry/exit from a closed line of joining.

18. A method for welding parts in thermoplastic material, comprising:
- a fusing step using electromagnetic radiation emission of the surface thermoplastic material of the line of joining of at least one of said parts to be welded, using a device according to one of claims 1-17; .
- a subsequent step of bringing said parts together
